# EUROPEAN PATENT SPECIFICATION

(11) **EP 0 776 589 B1**
(45) Date of publication and mention of the grant of the patent: **04.11.1998**
(21) Application number: 96919844.9
(22) Date of filing: 31.05.1996
(51) Int. Cl.: H04Q 7/38, H04Q 7/28

(54) **ALLOCATING CHANNELS IN A MOBILE RADIO SYSTEM**
KANALZUWEISUNG IN MOBILEN FUNKSYSTEMEN
ATTRIBUTION DES CANAUX DANS UN SYSTEME RADIOTELEPHONIQUE MOBILE

(30) Priority: 16.06.1995 GB 9512295
(43) Date of publication of application: 04.06.1997
(73) Proprietor: NOKIA TELECOMMUNICATIONS OY, 02150 Espoo (FI)
(72) Inventor: LOWDON, Chris, J., Cambridge CB3 0NR (GB); TUULOS, Martti, FIN-33900 Tampere (FI)
(74) Representative: Sarajuuri, Mika Eerik
(86) International application number: FI9600324
(87) International publication number: WO9700590

(56) References cited:
- EP-A- 0 510 630
- DE-A- 4 307 966
- GB-A- 2 281 481
- US-A- 5 448 750

## Description

### Field of the Invention

The invention relates to a method for allocating channels in a mobile communications system comprising a data base, a first base station and second base stations interfering with the first base station, isolated mobile radios, each of which is normally capable of communicating solely within a coverage area of a specified base station, and freely mobile radios, each of which is capable of communicating via any of the base stations.

The invention relates to the field of radio phone systems. A subscriber in a radio phone system, i.e. a radio unit or a subscriber station, for instance a radio phone or some other means of communication, may be registered in a radio network or system, whereby it is registered in the radio network via system and traffic channels maintained by the base stations of the radio network.

The method of the invention is specifically designed for use in what are known as trunked networks, which are typically company networks cr government networks in which all channels are shared by one or several companies or governmental agencies.

This invention is especially suitable for radio systems where part of the radio users, or a group of users, may always be located in such isolated areas that the channels used by them could be reused already at the neighbouring base stations. Such user groups can be found, for instance, in underground (railway) systems.

The invention is suitable for use in mobile radio systems with digital as well as analog radio paths. Analog mobile radio systems have been described for example in *MPT 1327*, January 1988, revised and reprinted November 1991, *A Signalling Standard for Trunked Private Land Mobile Radio Systems,* and *MPT 1343,* January 1988, revised and reprinted September 1991, *Performance Specification,* United Kingdom Department of Trade and Industry, Radiocommunications Agency.

### Background of the Invention

In mobile telecommunications systems the number of useable radio channels is very often restricted. This is often the case especially in trunked or PMR (Private Mobile Radio) networks. Thus, the problem to be solved by this invention is how to reduce the number of radio channels used in a mobile radio system, especially in a PMR system.

In a conventional channel management system, channels must be divided between base station sites in a way which ensures that the base stations do not interfere with each other. The same channel cannot be given to sites which are close enough to cause interference. This makes it possible to use any channel at any time without checking if the channel is already being used.

This basic solution restricts planning and reduces efficiency in systems where the number of channels is restricted. Closely-located base station sites must have different channels. This means that the whole channel capacity of one site may be reserved and users are queuing, even if there would be free channels available on nearby sites.

One example of a prior art method of channel allocation is shown in patent specification GB 1 393 614.

A newer prior art method for allocating channels is called dynamic channel allocation. The basic idea in dynamic channel allocation is that the same channels can be shared by base station sites even if they are situated geographically close enough to cause interference. Nearby sites sharing the same channels are listed in the exchange, and whenever a shared channel is allocated for a call, it is blocked from use on sites where it might cause interference. When the channel has been released, it is again available to any of these sites.

With dynamic channel allocation, the coverage of the system can be extended without it being necessary to add more channels. The channels of the system can be used on any base station site according to traffic load. The maximum call switching capacity of the system will not be increased, however.

### Description of the Invention

It is an object of the present invention to avoid the problems involved in the solutions according to the prior art. Thus, it is an object of the present invention to provide a method for allocating radio channels in a mobile communications system, in which method the number of used radio channels is as low as possible.

This invention relates to a method for allocating channels in a mobile communications system comprising a data base, a first base station and second base stations interfering with the first base station, isolated mobile radios, each of which is normally capable of communicating solely within a coverage area of a specified base station, and freely mobile radios, each of which is capable of communicating via any of the base stations, the method comprising the following steps: maintaining in the data base a file on the interfering base stations for the first base station, selecting a free channel to be allocated to a requesting mobile radio at the first base station, checking whether the mobile radio is an isolated mobile radio or a freely mobile radio, checking whether the selected channel is free at the interfering base stations, allocating said selected channel if the selected channel is free at the interfering base stations, allocating said selected channel if the selected channel is allocated only to one or to several isolated mobile radios at one or several interfering base stations and if the requesting mobile radio is an isolated mobile radio, preventing allocation of said selected channel if the selected channel is allocated to a freely mobile radio at any of said interfering base stations, preventing allocation of said selected channel if the selected channel is allocated at any of the interfering base stations and if the requesting mobile radio is a freely mobile radio.

The present invention further relates to a mobile communications system comprising: a first base station and second base stations interfering with the first base station, isolated mobile radios, each of which is normally capable of communicating solely within a coverage area of a specified base station, and freely mobile radios, each of which is capable of communicating via any of the base stations, a data base for maintaining a file on the interfering base stations for the first base station, a selector for selecting a free channel to be allocated to a requesting mobile radio at the first base station, a first checker for checking whether the mobile radio is an isolated mobile radio or a freely mobile radio, a second checker for checking whether the selected channel is free at the interfering base stations, a first allocator for allocating said selected channel if the selected channel is free at the interfering base stations, a second allocator for allocating said selected channel if the selected channel is allocated only to one or to several isolated mobile radios at one or several interfering base stations and if the requesting mobile radio is an isolated mobile radio, first preventer for preventing allocation of said selected channel if the selected channel is allocated to a freely mobile radio at any of said interfering base stations, a second preventer for preventing allocation of said selected channel if the selected channel is allocated at any of the interfering base stations and if the requesting mobile radio is a freely mobile radio.

The invention is based on the idea that the channel reservation situation of the mobile communications system is always checked also on the interfering base stations when allocating a new channel of a base station. According to the new method, each time the system allocates a new channel to a mobile radio on a (first) base station site, it checks that there is a free channel for the mobile radio on that site. If there is a free channel to be found, it is then checked whether there are still any base station sites that interfere with the first base station site. If there are no more interfering sites around the first site, then the channel is allocated to an isolated radio on the first base station site. Thus, if there are more interfering sites for the first site, it is checked whether that same channel is free on the second, interfering, base station site adjacent to the first base station site. If the channel is free at the other (second), interfering base station in the vicinity of the first base station, then the operation returns back to the phase where it is checked whether there are still any base station sites that interfere with the first base station site. However, if the channel is not free at the second base station, it is checked whether the channel to be allocated is used by an isolated radio (IR), i.e. a radio that is normally capable of communicating solely within a coverage area of a specified base station. If the channel to be allocated is used only by one or several isolated radios, then it is clear that, concerning that second base station site, that specific channel can be used on the first base station site. In the other case, if the channel is used by a freely mobile radio (FR), which is capable of communicating via any base station of the network, then that channel can not be allocated for the intended use.

According to the new method, it is checked whether the mobile station that is going to use the channel is an isolated radio, which is normally capable of communicating solely within a coverage area of a specified base station, or whether the mobile station is a freely mobile radio, which is capable of communicating via any base station of the network.

### Benefits of the Invention

It is an advantage of such a method and mobile exchange in a mobile radio system that the method and mobile exchange of the invention improve the channel allocation efficiency in mobile communications systems.

A further advantage of the invention is that when the mobile communications system has only isolated radios (IR), which are normally capable of communicating solely within a coverage area of a specified base station, and a limited number of channels, then the number of channels available on a base station site can be multiplied by the number of interfering sites because of the invention.

Still another advantage of the invention is that when the system has both IR and FR mobile radios, the number of channels available on a base station site can be multiplied by the number of interfering sites in the ratio of N_{IR}/(N_{IR}+N_{FR}) because of the invention.

### Brief Description of the Drawings

In the following the invention will be explained in greater detail with reference to the accompanying drawings, in which
Figure 1 is a simplified schematic view of an underground (railway) system in which the invention is implemented,
Figure 2 is a flow chart of the operation of the invention,
Figure 3 is a block diagram illustrating the database realizing the invention.

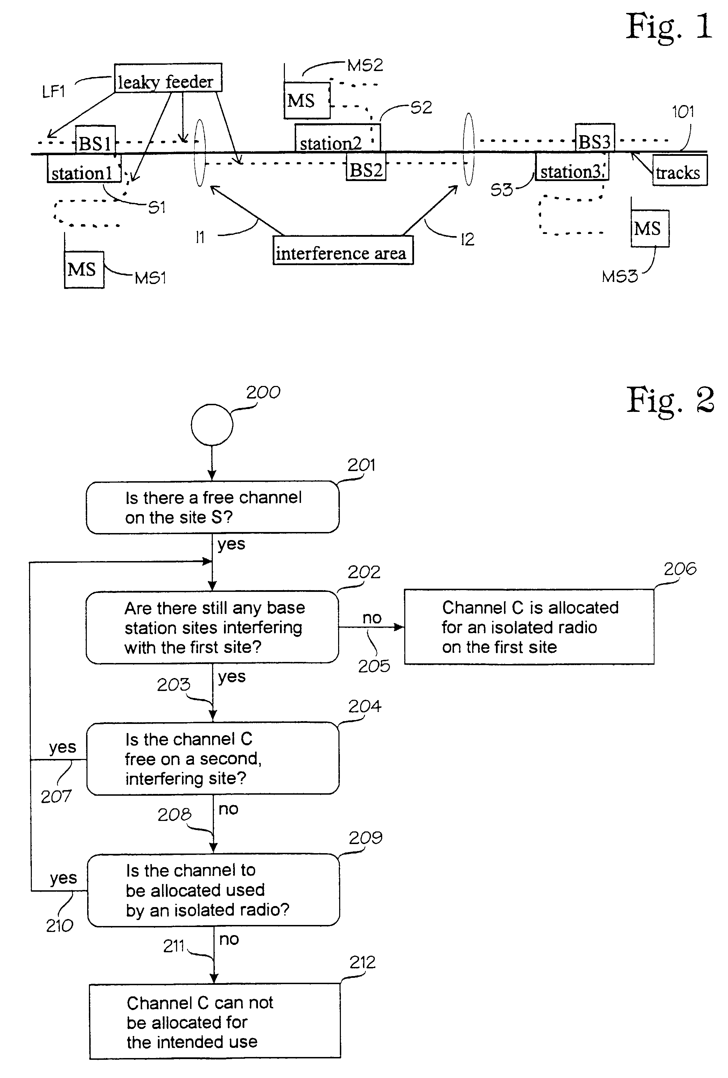

Figure 1 is a simplified schematic view of an underground (railway) system in which the invention is implemented. In underground radio systems, for example in the city of London, there is a base station BS1, BS2, BS3 in each railway station S1, S2, S3 feeding leaky cables LF1 on track 101 sides and as well as at stations S1 to S3. Neighbouring base stations BS1, BS2; BS2, BS3 interfere only in a small area I1; I2 between stations S1, S2; S2, S3 where their leaky feeders LF1 meet. This means that handportables MS1, MS3, which are only used at stations S1 and S3 respectively, will never have interfering problems with each other even if they are using the same frequencies at the same time. In the system there is also a handportable mobile station MS2 that is a freely mobile radio (FR), which is capable of communicating via any base station of the network according to the interfering site concept.

On the other hand, mobile radios mounted on trains and handportables inside trains can interfere with one another and also with isolated radios MS1, MS3 at stations S1, S2, S3. For these freely mobile radios it is thus essential to have appropriate interfering site definitions in the system.

To have more channel capacity for handportables at stations, the system should be able to make a difference between station handportables, i.e. isolated radios (IR), which are normally capable of communicating solely within a coverage area of a specified base station, and train-carried radios, i.e. freely mobile radios (FR), which are capable of communicating via any base station of the network according to the interfering site concept.

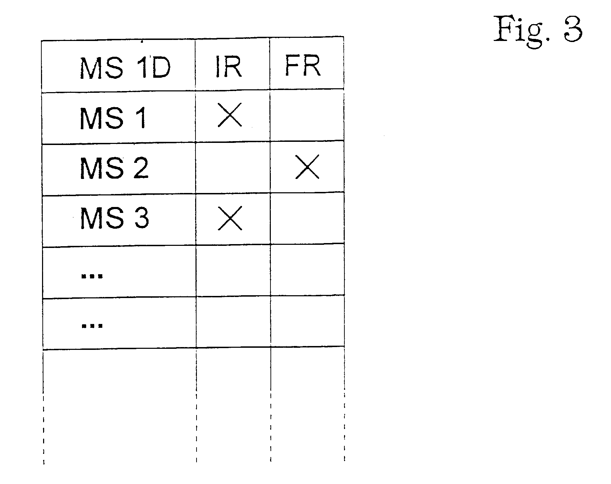

Figure 2 is a flow chart of the operation of the invention. The operation of the method starts in phase 200. According to the new inventive method, each time the system allocates a new channel to a mobile radio on a (first) base station site, it checks 201 that there is a free channel C for the mobile radio on that site S. If there is a free channel to be found, it is then checked 202 whether there are still any base station sites that interfere with the first base station site. If there are 205 no more interfering sites for the first site, then the channel C is allocated 206 to an isolated radio on the first base station site.

However, if there are 203 more interfering sites for the first site, it is checked 204 whether that same channel is free on the second, interfering, base station site adjacent to the first base station site. If the channel is free 207 on the other (second), interfering base station in the vicinity of the first base station, then the operation returns to phase 202. However, if the channel is not free 208 at the second base station, it is checked 209 whether the channel to be allocated is used by an isolated radio (IR), i.e. a radio that is normally capable of communicating solely within a coverage area of a specified base station. If the channel to be allocated is used 210 by an isolated radio, then it is clear that, concerning that second base station site, that specific channel can be used on the first base station site. Then the system returns 210 to phase 202. In the other case, if the channel is used 211 by a freely mobile radio, which is capable of communicating via any base station of the network, then that channel can not be allocated 212 for the intended use.

Next we are going to clarify the channel allocation conditions for channels on interfering base station sites. In the following, FR means a freely mobile radio, i.e. freely mobile radios capable of communicating via any base station of the network. Further, IR means an isolated radio, which is normally capable of communicating solely within a coverage area of a specified base station. The following conditions must be fulfilled before starting to use the same channels on interfering base station sites.
1. The channel will be used by IR.
2. The channel is not used by any FR on this or on any interfering site.

It is possible to define whether the subscriber is a FR or IR subscriber on a user or user group basis in the subscriber data base of the mobile communications system.

Figure 3 is a block diagram illustrating the database realizing the invention. The database contains the identifiers MS ID of the mobile stations MS1, MS2, MS3. In the database there are two flags for every identifier MS1, MS2, MS3 of the mobile station. The IR flag indicates whether the mobile station in question is an isolated radio, and FR flag indicates whether the mobile in question is a freely mobile radio.

In the data base is also maintained a file on the interfering base stations for all of the base stations, particularly for the first base station.

The drawings and the description referring to them are only intended to illustrate the idea of the invention. The method and mobile exchange in a mobile radio system for allocating channels in a mobile radio system in accordance with the invention may vary in their details within the scope of the claims. Even though the invention has been presented above primarily in connection with PMR systems, it may be implemented in other kinds of radio telephone and mobile telephone systems as well.

## Claims

1. A method for allocating channels in a mobile communications system comprising a data base, a first base station and second base stations interfering with the first base station, isolated mobile radios (MS1, MS3), each of which is normally capable of communicating solely within a coverage area of a specified base station (BS1, BS3), and freely mobile radios (MS2), each of which is capable of communicating via any of the base stations (BS1, BS2, BS3), **characterized** in that the method comprises the following steps:
maintaining in the data base a file on the interfering base stations for the first base station,
selecting a free channel to be allocated to a requesting mobile radio at the first base station,
checking whether the mobile radio is an isolated mobile radio or a freely mobile radio,
checking whether the selected channel is free at said second base stations interfering with the first base station,
allocating said selected channel if the selected channel is free at the second base stations interfering with the first base station,
allocating said selected channel if the selected channel is allocated only to one or to several isolated mobile radios at one or several second base stations interfering with the first base station and if the requesting mobile radio is an isolated mobile radio,
preventing allocation of said selected channel if the selected channel is allocated to a freely mobile radio at any of said second interfering base stations interfering with the first base station,
preventing allocation of said selected channel if the selected channel is allocated at any of said second base stations, interfering with the first base station and if the requesting mobile radio is a freely mobile radio.

2. A mobile communications system, comprising:
a first base station and second base stations interfering with the first base station,
isolated mobile radios (MS1, MS3), each of which is normally capable of communicating solely within a coverage area of a specified base station (BS1, BS3), and
freely mobile radios (MS2), each of which is capable of communicating via any of the base stations (BS1, BS2, BS3), **characterized** in that the system further comprises:
a data base for maintaining a file on the second, interfering base stations interfering with the first base station for the first base station,
a selector for selecting a free channel to be allocated to a requesting mobile radio at the first base station.
a first checker for checking whether the mobile radio is an isolated mobile radio or a freely mobile radio,
a second checker for checking whether the selected channel is free at the second base stations interfering with the first base station,
a first allocator for allocating said selected channel if the selected channel is free at said second base stations interfering with the first base station,
a second allocator for allocating said selected channel if the selected channel is allocated only to one cr to several isolated mobile radios at one or several interfering base stations and if the requesting mobile radio is an isolated mobile radio,
a first preventer for preventing allocation of said selected channel if the selected channel is allocated to a freely mobile radio at any of said second base stations, interfering with the first base stations,
a second preventer for preventing allocation of said selected channel if the selected channel is allocated at any of said second base stations interfering with the first base staticn and if the requesting mobile radio is a freely mobile radio.

## Patentansprüche

1. Verfahren zur Kanalzuweisung in einem Mobilkommunikationssystem, das eine Datenbank, eine erste Basisstation und mit der ersten Basisstation interferierende zweite Basisstationen, isoliert mobile Mobilfunkgeräte (MS1, MS3), von denen es jedem normalerweise möglich ist, nur innerhalb eines Sendebereichs einer bestimmten Basisstation (BS1, BS3) zu kommunizieren, und frei mobile Mobilfunkgeräte (MS2) umfaßt, von denen es jedem möglich ist, über irgendeine der Basisstationen (BS1, BS2, BS3) zu kommunizieren,
**dadurch gekennzeichnet, daß** das Verfahren die folgenden Schritte umfaßt:
Führen einer die interferierenden Basisstationen für die erste Basisstation betreffenden Datei in der Datenbank,
Auswählen eines einem anfordernden Mobilfunkgerät bei der ersten Basisstation zuzuweisenden freien Kanals,
Überprüfen, ob das Mobilfunkgerät ein isoliert mobiles Mobilfunkgerät oder ein frei mobiles Mobilfunkgerät ist,
Überprüfen, ob der ausgewählte Kanal bei den mit der ersten Basisstation Interferierenden zweiten Basisstationen frei ist,
Zuweisen des ausgewählten Kanals, wenn der ausgewählte Kanal bei den mit der ersten Basisstation interferiernden zweiten Basisstationen frei ist,
Zuweisen des ausgewählten Kanals, wenn der ausgewählte Kanal lediglich einem oder mehreren isoliert mobilen Mobilfunkgeräten bei einer oder mehreren mit der ersten Basisstation interferierenden zweiten Basisstationen zugewiesen ist und wenn das anfordernde Mobilfunkgerät ein isoliert mobiles Mobilfunkgerät ist,
Verhindern der Zuweisung des ausgewählten Kanals, wenn der ausgewählte Kanal einem frei mobilen Mobilfunkgerät bei irgendeiner der mit der ersten Basisstation interferierenden zweiten interferierenden Basisstationen zugewiesen ist,
Verhindern der Zuweisung des ausgewählten Kanals, wenn der ausgewählte Kanal bei irgendeiner der mit der ersten Basisstation interferierenden zweiten Basisstationen zugewiesen ist und wenn das anfordernde Mobilfunkgerät ein frei mobiles Mobilfunkgerät ist.

2. Mobilkommunikationssystem, mit
einer ersten Basisstation und mit der ersten Basisstation interferierenden zweiten Basisstationen,
isoliert mobilen Mobilfunkgeräten (MS1, MS3), von denen es jedem normalerweise möglich ist, nur innerhalb eines Sendebereichs einer bestimmten Basisstation (BS1, BS3) zu kommunizieren, und
frei mobilen Mobilfunkgeräten (MS2), von denen es jedem möglich ist, über irgendeine der Basisstationen (BS1, BS2, BS3) zu kommunizieren,
**gekennzeichnet durch**
eine Datenbank zum Führen einer Datei für die erste Basisstation bezüglich der mit der ersten Basisstation interferierenden zweiten Basisstationen,
eine Auswahleinrichtung zum Auswählen eines einem anfordernden Mobilfunkgerät bei der ersten Basisstation zuzuweisenden freien Kanals,
eine erste Überprüfungseinrichtung zum Überprüfen, ob das Mobilfunkgerät ein isoliert mobiles Mobilfunkgerät oder ein frei mobiles Mobilfunkgerät ist,
eine zweite Überprüfungseinrichtung zum Überprüfen, ob der ausgewählte Kanal bei den mit der ersten Basisstation interferierenden zweiten Basisstationen frei ist,
eine erste Zuweisungseinrichtung zum Zuweisen des ausgewählten Kanals, wenn der ausgewählte Kanal bei den mit der ersten Basisstation interferiernden zweiten Basisstationen frei ist,
eine zweite Zuweisungseinrichtung zum Zuweisen des ausgewählten Kanals, wenn der ausgewählte Kanal lediglich einem oder mehreren isoliert mobilen Mobilfunkgeräten bei einer oder mehreren interferierenden Basisstationen zugewiesen ist und wenn das anfordernde Mobilfunkgerät ein isoliert mobiles Mobilfunkgerät ist,
eine erste Verhinderungseinrichtung zum Verhindern der Zuweisung des ausgewählten Kanals, wenn der ausgewählte Kanal einem frei mobilen Mobilfunkgerät bei irgendeiner der mit der ersten Basisstation interferierenden zweiten Basisstationen zugewiesen ist, und
eine zweite Verhinderungseinrichtung zum Verhindern der Zuweisung des ausgewählten Kanals, wenn der ausgewählte Kanal bei irgendeiner der mit der ersten Basisstation interferierenden zweiten Basisstationen zugewiesen ist und wenn das anfordernde Mobilfunkgerät ein frei mobiles Mobilfunkgerät ist.

## Revendications

1. Procédé pour attribuer des canaux dans un système radiotéléphonique mobile, comprenant une base de données, une première station de base et des deuxième stations de base brouillant la première station de base, des radiotéléphones mobiles isolés (MS1, MS3) dont chacun est normalement apte à communiquer uniquement dans une zone de desserte d'une station de base donnée (BS1, BS3), et des radiotéléphones (MS2) à liberté de mouvements dont chacun est apte à communiquer par l'intermédiaire de n'importe laquelle des stations de base (BS1, BS2, BS3), caractérisé en ce que le procédé comprend les étapes consistant à:
actualiser dans la base de données un fichier sur les stations de base exerçant un brouillage pour la première station de base,
sélectionner dans la première station de base un canal à attribuer à un radiotéléphone mobile demandeur,
vérifier si le radiotéléphone mobile est un radiotéléphone mobile isolé ou un radiotéléphone à liberté de mouvements,
vérifier si le canal choisi est libre dans lesdites deuxième stations de base brouillant la première station de base,
attribuer ledit canal choisi si le canal choisi est libre dans les deuxième stations de base brouillant la première station de base,
attribuer ledit canal choisi si le canal choisi est attribué à un seul ou à plusieurs radiotéléphones mobiles isolés dans une ou plusieurs secondes stations de base brouillant la première station de base et si le radiotéléphone mobile demandeur est un radiotéléphone mobile isolé,
empêcher, dans n'importe laquelle desdites deuxième stations de base exerçant un brouillage de la première station de base, l'attribution dudit canal choisi si le canal choisi est attribué à un radiotéléphone à liberté de mouvements,
empêcher l'attribution dudit canal sélectionné si le canal sélectionné est attribué à l'une des deuxièmes stations de base brouillant la première station de base et si le radiotéléphone mobile demandeur est un radiotéléphone à liberté de mouvements.

2. Système radiotéléphonique mobile, comprenant:
une première station de base et des deuxièmes stations de base brouillant la première station de base,
des radiotéléphones mobiles isolés (MS1, MS3) dont chacun est normalement apte à communiquer uniquement dans une zone de desserte d'une station de base donnée (BS1, BS3), et
des radiotéléphones (MS2) à liberté de mouvements dont chacun est apte à communiquer par l'intermédiaire de l'une quelconque des stations de base (BS1, BS2, BS3), caractérisé en ce que le système comprend en outre:
une base de données servant à actualiser un fichier concernant une première station de base dans les deuxièmes stations de base brouillant la première station de base,
un sélecteur servant à sélectionner dans la première station de base un canal libre à attribuer à un radiotéléphone mobile demandeur,
un premier moyen de contrôle servant à vérifier si le radiotéléphone mobile est un radiotéléphone mobile isolé ou un radiotéléphone à liberté de mouvements,
un deuxième moyen de contrôle servant à vérifier si le canal sélectionné est libre dans les deuxièmes stations de base brouillant la première station de base,
un premier moyen d'attribution servant à attribuer ledit canal sélectionné si le canal sélectionné libre dans lesdites deuxièmes stations de base brouillant la première station de base,
un deuxième moyen d'attribution servant à attribuer ledit canal sélectionné si le canal sélectionné est attribué à un seul ou à plusieurs radiotéléphones mobiles isolés dans une ou plusieurs stations de base exerçant un brouillage et si le radiotéléphone mobile demandeur est un radiotéléphone mobile isolé,
un premier moyen de prévention servant, dans l'une quelconque desdites deuxième stations de base brouillant la première station de base, à empêcher l'attribution dudit canal sélectionné si le canal sélectionné est attribué à un radiotéléphone à liberté de mouvements,
un deuxième moyen de prévention servant à empêcher l'attribution dudit canal sélectionné si le canal sélectionné est attribué, dans l'une quelconque desdites deuxièmes stations brouillant la première station de base, et si le radiotéléphone mobile demandeur est un radiotéléphone à liberté de mouvements.
